# EUROPÄISCHE PATENTSCHRIFT

(11) **EP 2 837 549 B1**
(45) Veröffentlichungstag und Bekanntmachung des Hinweises auf die Patenterteilung: **03.02.2016**
(21) Anmeldenummer: 14179501.3
(22) Anmeldetag: 01.08.2014
(51) Int. Cl.: B62D 33/02, B60J 5/06

(54) **Runge für ein Nutzfahrzeug**
Stanchion for a commercial vehicle
Rancher de véhicule utilitaire

(30) Priorität: 13.08.2013 DE 102013108751
(43) Veröffentlichungstag der Anmeldung: 18.02.2015
(73) Patentinhaber: WIHAG Fahrzeugbausysteme GmbH, 33602 Bielefeld (DE)
(72) Erfinder: Werth, Mario, 32120 Hiddenhausen (DE)
(74) Vertreter: Dantz, Jan Henning

(56) Entgegenhaltungen:
- EP-A1- 2 184 221
- DE-U1-202008 012 966

## Beschreibung

Die vorliegende Erfindung betrifft eine Runge für ein Nutzfahrzeug nach dem Oberbegriff des Anspruches 1.

Die EP 2 184 221 offenbart eine Lattenhalterung für einen Nutzfahrzeugaufbau, bei dem mehrere vertikale Rungen vorgesehen sind, an denen seitlich Tragschalen zur Fixierung von einsteckbaren Latten vorgesehen sind. Um ein Verklemmen der Latten beim Einschieben in die Tragschalen durch Befestigungsmittel am Boden der Tragschalen zu vermeiden, sind Führungsflächen ausgebildet, die der Stirnseite einer Latte gegenüberliegen und das Einschieben erleichtern sollen. Sofern mehrere beabstandete Führungsflächen am Boden der Tragschale vorgesehen sind, kann es allerdings auch hier zu einem Verklemmen beim Einschieben der Latten kommen. Zudem besteht das Problem, dass die zweiteilig ausgebildete vertikale Pfostenstütze aufgrund mehrerer formschlüssig aneinander liegender Wandabschnitte verklemmen kann. Die Herstellung und Montage der Tragschalen ist zudem aufwändig.

Es ist daher Aufgabe der vorliegenden Erfindung, eine Runge für ein Nutzfahrzeug zu schaffen, die leicht zu montieren ist und ein einfaches Einschieben der Latten ermöglicht.

Diese Aufgabe wird mit einer Runge mit den Merkmalen des Anspruches 1 gelöst.

Erfindungsgemäß umfasst die Runge ein Basisprofil und ein Stützprofil, wobei eine Wand des Stützprofils benachbart zu einer Innenseite einer Seitenwand des Basisprofils im Querschnitt gesehen zumindest teilweise winklig zu der Seitenwand verläuft, um eine Aufnahme für Befestigungsmittel für die Tragschale zwischen der Seitenwand des Basisprofils und der Wand des Stützprofils auszubilden. Dadurch ist es möglich, die Tragschalen mit Befestigungsmitteln, wie Schrauben oder Nieten, an der Seitenwand des Basisprofils zu fixieren, so dass auf ein Verschweißen verzichtet werden kann. Die Befestigungsmittel können dabei an der Seitenwand nach innen in eine entsprechende Aufnahme hervorstehen, so dass die Befestigungsmittel weder an der Außenseite das Einschieben der Latten an der Tragschale behindern noch im Innenbereich ein Verschieben des Basisprofils relativ zu dem Stützprofil beeinträchtigt wird. Durch die winklige Anordnung der Wand des Stützprofils relativ zu der Seitenwand des Basisprofils wird zudem eine leichtgängige Bewegung des Stützprofils relativ zu dem Basisprofil bei der Montage gewährleistet, da zwischen Stützprofil und Basisprofil definierte Kontaktflächen vorhanden sind.

Vorzugsweise ist die Wand des Stützprofils benachbart zu der Innenseite der Seitenwand in einem Winkel zwischen 5° und 30°, insbesondere 8° und 20°, beispielsweise etwa 10° bis 15°, geneigt zu der Seitenwand ausgerichtet, so dass zwischen dem Basisprofil und dem Stützprofil eine dreieckförmige Aufnahme für Befestigungsmittel ausgebildet wird. Durch diese Ausgestaltung wird eine stabile Abstützung des Stützprofils an dem Basisprofil gewährleistet, da eine Biege- oder Torsionsbelastung von dem Stützprofil auf das Basisprofil abgetragen werden kann. Das Stützprofil kann im Wesentlichen formschlüssig innerhalb des Basisprofils geführt sein.

In einer vorteilhaften Ausgestaltung sind die Befestigungsmittel zur Fixierung der mindestens einen Tragschale außermittig zur Mitte in Längsrichtung des Basisprofils gesehen angeordnet. Dabei kann die Seitenwand des Basisprofils durch eine vertikale Mittelebene in zwei Abschnitte unterteilt werden, wobei die Befestigungsmittel vorzugsweise außerhalb dieser Mittelebene angeordnet sind. Je nach Formgestaltung des Stützprofils im Bereich der Seitenwand des Basisprofils können die Befestigungsmittel auch mittig angeordnet werden. Das Stützprofil ist im Querschnitt im Wesentlichen C-förmig ausgebildet und umfasst eine Bodenwand, zwei Wände benachbart zu jeweils einer Seitenwand des Basisprofils und zwei endseitige Stege. Die zwei endseitigen Stege können dabei parallel zu der Bodenwand angeordnet sein. Das Basisprofil weist vorzugsweise einen Mittelabschnitt auf, der parallel zu der Bodenwand des Stützprofils angeordnet ist. Ferner weist das Basisprofil beidseitig des Mittelabschnittes Aufnahmen zum Einfügen von Wänden und endseitigen Stegen des Stützprofils auf, wobei die Aufnahme bis auf eine schlitzförmige Durchführung weitgehend geschlossen ausgebildet ist. Dies ermöglicht einen kompakten Aufbau und eine stabile Abstützung des Stützprofils an dem Basisprofil.

Vorzugsweise werden Basisprofil und Stützprofil über Befestigungsmittel aneinander festgelegt, beispielsweise durch Schrauben oder Nieten, die in der Bodenwand des Stützprofils und dem Mittelabschnitt des Basisprofils montiert sind. Über die Länge verteilt können mehrere Befestigungsmittel vorgesehen sein. Alternativ ist es möglich, das Basisprofil und das Stützprofil relativ zueinander verschiebbar auszugestalten, insbesondere wenn ein Dach des Nutzfahrzeuges anhebbar ausgestaltet ist. Dann kann das Stützprofil beim Anheben des Daches nach oben verfahren werden und wird durch das Basisprofil geführt. An dem Basisprofil kann dann ein Anschlag vorgesehen sein, um das Absenken des Stützprofils von einer angehobenen Position nach unten zu begrenzen.

Das Basisprofil und/oder das Stützprofil sind vorzugsweise aus einem gebogenen Metallblech hergestellt. Auch die Tragschale kann aus einem gebogenen Metallblech hergestellt sein.

Die Erfindung wird nachfolgend anhand eines Ausführungsbeispiels mit Bezug auf die beigefügten Zeichnungen näher erläutert. Es zeigen:

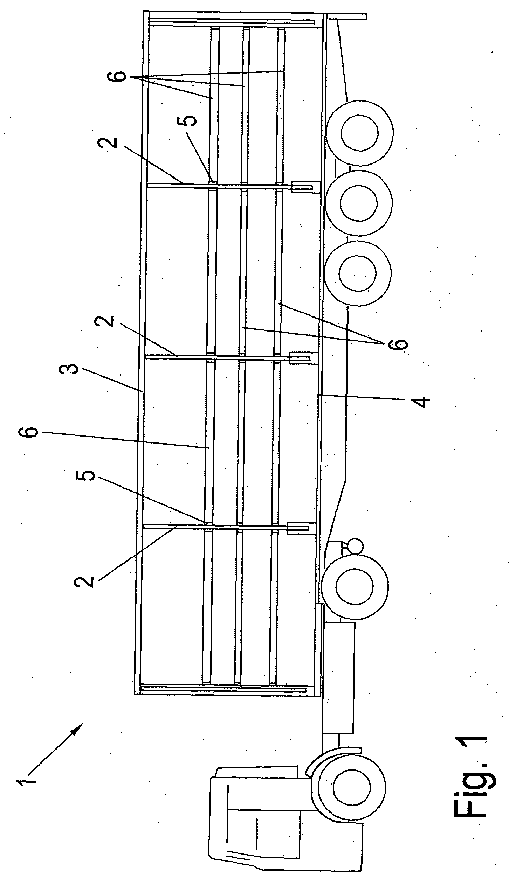

- Figur 1: eine Ansicht eines Nutzfahrzeuges mit mehreren Rungen an dem Ladeboden;
- Figur 2: eine perspektivische Ansicht einer Runge des Nutzfahrzeuges der Figur 1;

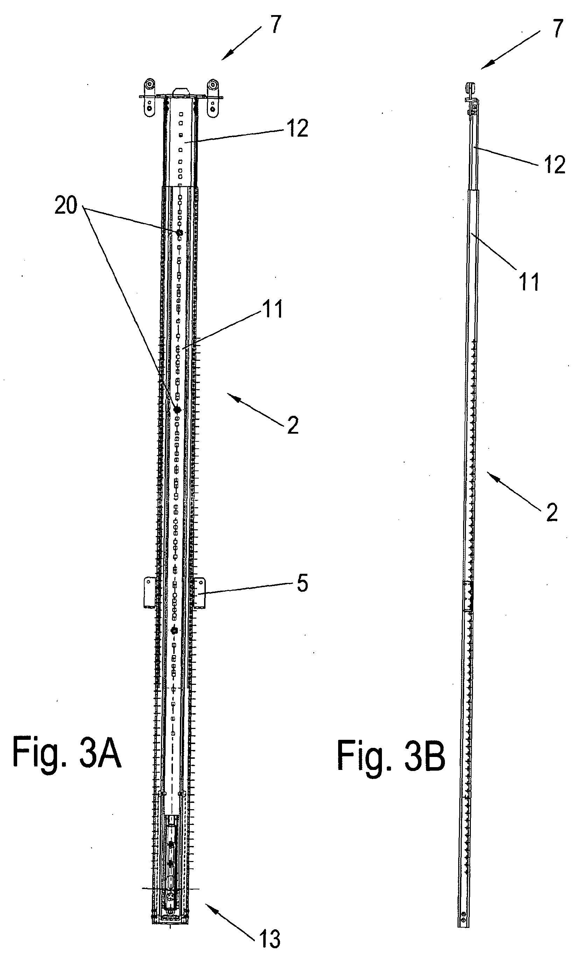

- Figuren 3A und 3B: zwei Ansichten der Runge der Figur 2;
- Figur 4: eine Detailansicht des Kopfteils der Runge der Figur 2;
- Figuren 5A und 5B: zwei Ansichten eines Fußteils der Runge der Figur 2 in der verriegelten Position;
- Figuren 6A und 6B: zwei Ansichten des Fußteils der Runge der Figur 2 in einer geöffneten Position;
- Figur 7: eine Schnittansicht durch die Runge der Figur 2 im Bereich der Tragschalen;
- Figur 8: eine Schnittansicht durch das Basisprofil und das Stützprofil der Runge der Figur 2 ohne weitere Bauteile;
- Figur 9: eine Schnittansicht durch das Basisprofil der Runge der Figur 2, und
- Figur 10: eine Schnittansicht durch das Stützprofil der Runge der Figur 2 in einer modifizierten Ausführungsform.

An einem Nutzfahrzeug 1 sind an einem Ladeboden 4 mehrere vertikale Rungen 2 montiert, die an ihrer Oberseite an einer Schiene 3 verfahrbar gelagert sind. Um eine Ladung auf dem Ladeboden 4 zu sichern, sind Rungen 2 im mittleren Bereich vorgesehen, an denen jeweils beidseitig Tragschalen 5 zum Einstecken von Latten 6 vorgesehen sind. Dadurch kann eine Ladung über die gesamte Länge des LKWs über die Rungen 2 und Latten 6 gesichert werden.

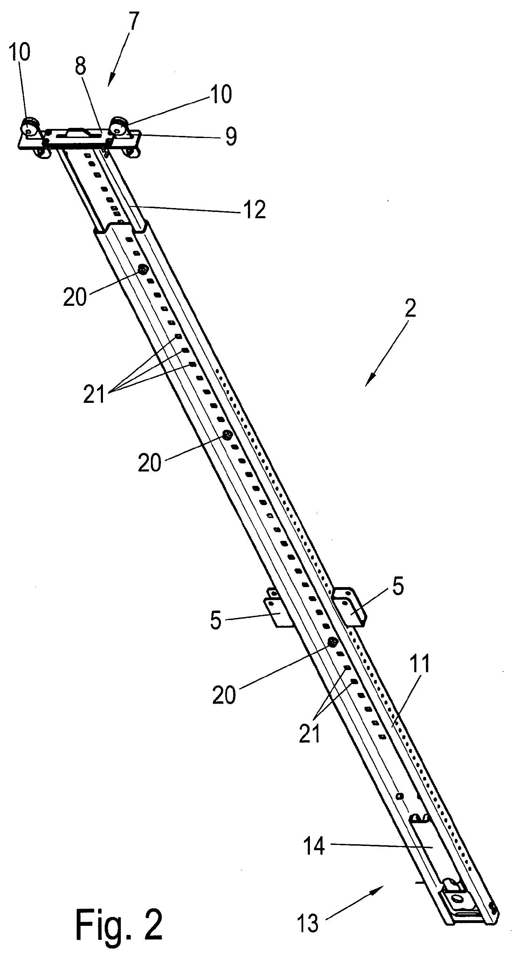

In Figur 2 ist eine Runge 2 im Detail dargestellt, die ein Basisprofil 11 aufweist, in das ein Stützprofil 12 eingeschoben ist. Das Basisprofil 11 und das Stützprofil 12 sind aus einem gebogenen Metallblech hergestellt, wobei das Stützprofil 12 an seiner Oberseite ein Kopfteil 7 aufweist, an dem ein Laufwagen zur Verbindung mit der Schiene 3 vorgesehen ist. Der Laufwagen umfasst eine horizontale Platte 8, an der vertikale Stege 9 mit Rollen 10 fixiert sind. An dem Basisprofil 11 ist eine Vielzahl von Öffnungen 21 vorgesehen, die sich über fast die gesamte Länge des Basisprofils 11 erstrecken. In einige der Öffnungen 21 sind Befestigungsmittel 20 in Form von Schrauben und Muttern vorgesehen, um das Stützprofil 12 in der gewünschten Höhe an dem Basisprofil 11 zu fixieren. Es ist auch möglich, statt der Befestigungsmittel 20 nur einen Anschlag an dem Basisprofil 11 zu montieren, um das Stützprofil 12 höhenverschieblich an dem Basisprofil 11 zu lagern.

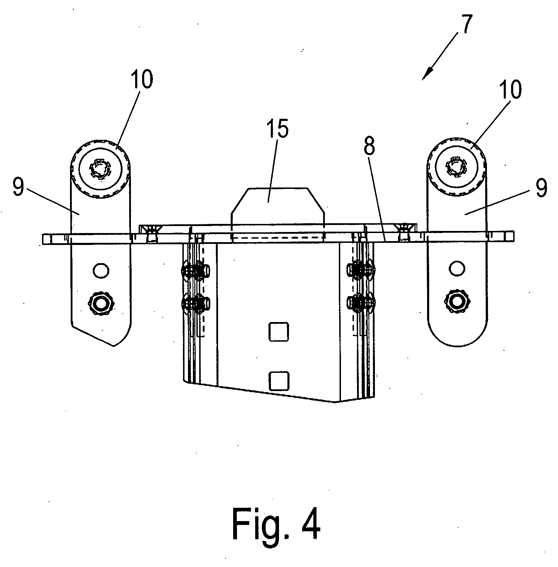

In Figur 4 ist das Kopfteil 7 im Detail dargestellt. Ein sich nach oben erstreckender Vorsprung 15 durchgreift die Platte 8 des Kopfteils 7, wobei beidseitig zu dem Vorsprung 15 vertikale Stege 9 an der Platte 8 fixiert sind, und an den Stegen 9 Rollen 10 drehbar gelagert sind, die an der Schiene 3 des Dachaufbaus verfahrbar sind.

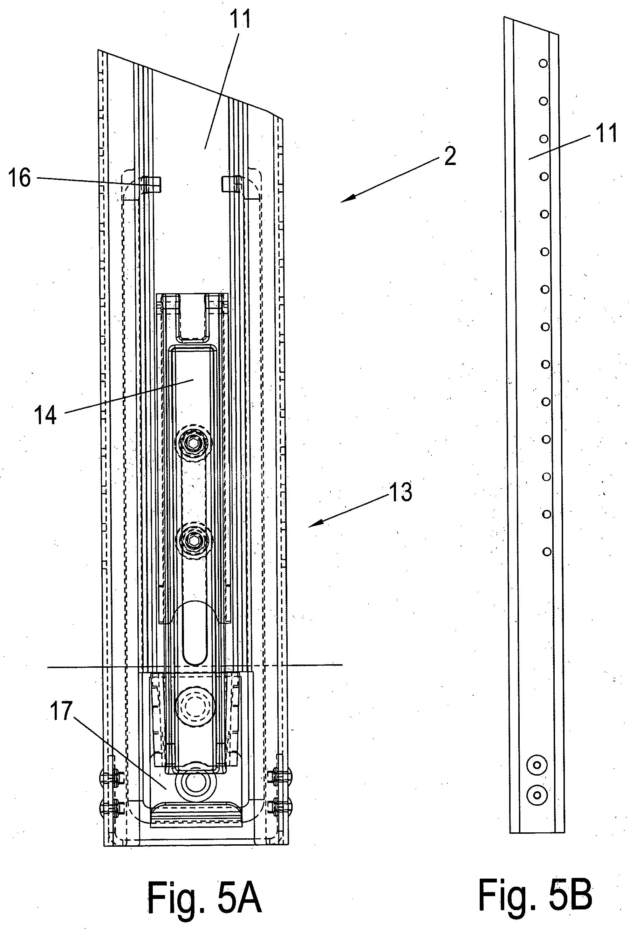

In den Figuren 5A und 5B ist ein Fußbereich der Runge 2 gezeigt, wobei an dem Basisprofil 11 ein Hebel 14 vorgesehen ist, mittels dem eine Verriegelung an einem Rungenlager benachbart zu dem Ladeboden 4 des Nutzfahrzeuges 1 vorgesehen ist. In den Figuren 5A und 5B ist der Hebel 14 parallel zur Längsrichtung des Basisprofils 11 ausgerichtet und somit in der verriegelten Position.

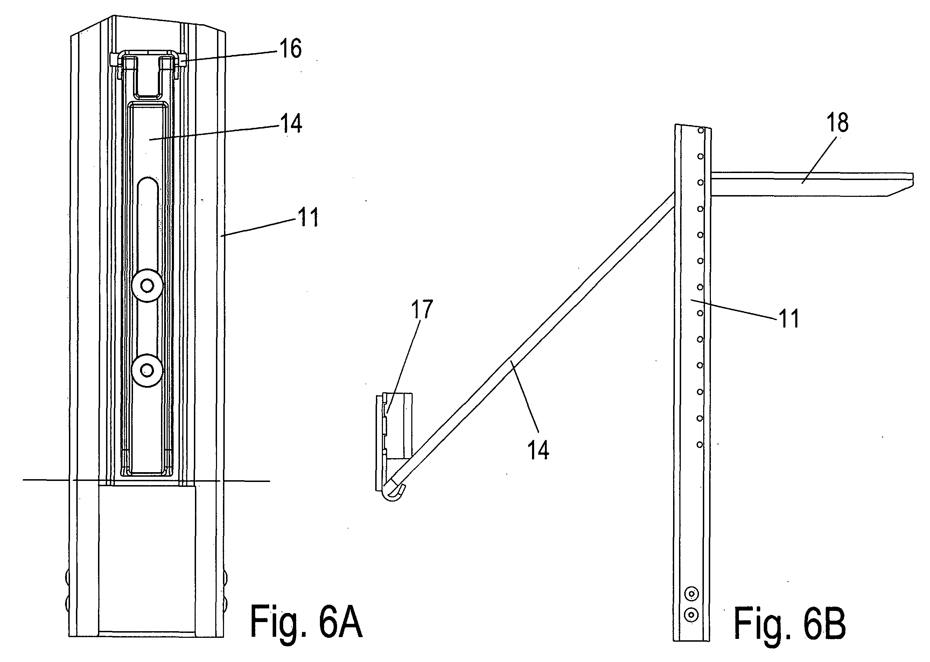

Wird der Hebel 14 nach oben verschwenkt, wie dies in den Figuren 6A und 6B gezeigt ist, wird die Verriegelung der Runge 2 mit dem Rungenlager am Ladeboden 4 entriegelt, wobei an dem Hebel 14 ein verschwenkbarer Griffabschnitt 17 vorgesehen ist, um den Hebel 14 um die Achse 16 zu drehen. Beim Verschwenken des Hebels 14 wird ein Sperrhebel 18 ebenfalls verschwenkt, so dass die Runge 2 in eine Längsrichtung des Nutzfahrzeuges 1 entlang der Schiene 3 verfahren werden kann. Die Rungen 2 an einer Seite eines Nutzfahrzeuges 1 können nach der Entriegelung von dem Rungenlager entlang der Schiene 3 verfahren werden, so dass über die gesamte Länge ein Beladen und Entladen erfolgen kann. Nach dem Verriegeln ist der Hebel 14 schon durch die Schwerkraft in einer verriegelten Position an dem Rungenlager selbsthemmend gehalten, so dass ein unbeabsichtigten Öffnen der Verriegelung verhindert wird.

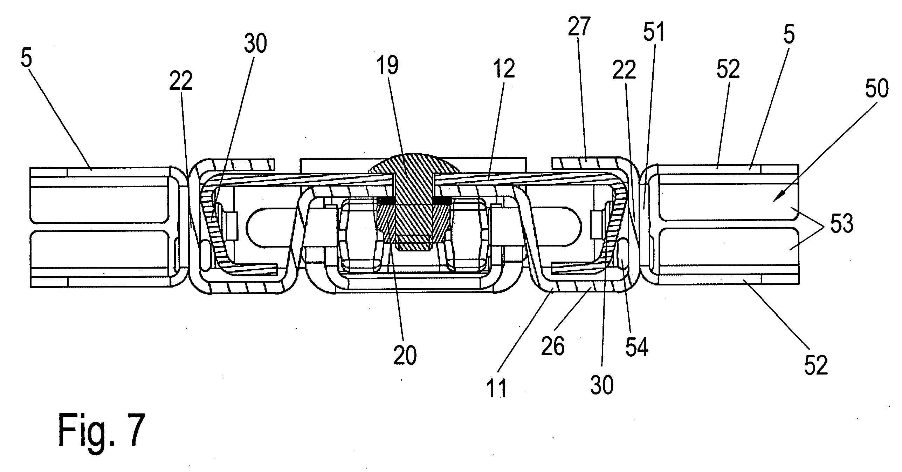

In Figur 7 ist ein Schnitt durch die Runge 2 im Bereich der Tragschalen 5 gezeigt. Jede Tragschale 5 umfasst eine Aufnahme 50, um einen Endabschnitt einer Latte 6 aufzunehmen, die beispielsweise einen rechteckförmigen Querschnitt besitzt. Die Aufnahme 50 ist bodenseitig durch Bodenstege 53 begrenzt und seitlich durch Seitenwände 52 der Tragschale 5. Eine Stirnwand 51 ist gegenüber zu einer Stirnseite der Latte 6 angeordnet und an einer Seitenwand 22 des Basisprofils 11 festgelegt. Die Stirnwand 51 kann dabei zur Aufnahme 50 hin im Wesentlichen eben ausgebildet sein, so dass ein leichtgängiges Einführen der Latte 6 gewährleistet wird.

Um die Tragschale 5 ohne Schweißen an dem Basisprofil 11 festlegen zu können, ist zwischen einer Wand 30 des Stützprofils und der Seitenwand 22 des Basisprofils 11, an dem außen die Stirnwand 51 der Tragschale 5 festgelegt ist, eine Aufnahme für Befestigungsmittel 54 vorgesehen. In dem dargestellten Ausführungsbeispiel verläuft die Wand 30 in einem Winkel zwischen 10° und 15° zu der Seitenwand 22, so dass eine dreieckförmige Aufnahme für die Befestigungsmittel 54 ausgebildet ist, die beispielsweise aus Schrauben oder Nieten bestehen. Dadurch kann ein Kopf des Befestigungsmittels 54 in die Aufnahme hervorstehen, ohne ein Verschieben des Stützprofils 12 relativ zu dem Basisprofil 11 zu behindern oder ein Einschieben der Latten 6 in die Aufnahme 50 der Tragschale 5 zu beeinträchtigen.

In Figur 7 ist ferner noch die Befestigung des Stützprofils 12 an dem Basisprofil 11 gezeigt, wobei hierfür eine Schraube 19 vorgesehen ist, an der eine Mutter als Befestigungsmittel 20 fixiert ist, so dass in einem mittleren Bereich des Basisprofils 11 und des Stützprofils 12 diese klemmend aneinander festgelegt sind.

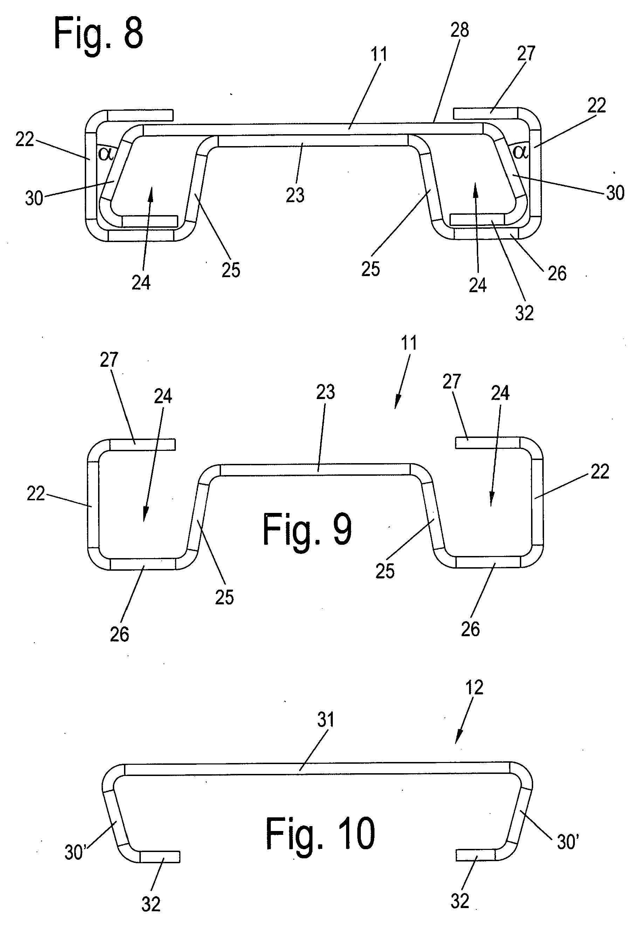

In Figur 8 sind das Basisprofil 11 und das Stützprofil 12 im Schnitt ohne weitere Bauteile gezeigt. Die Seitenwand 22 des Basisprofils 11 verläuft in einem Winkel α zu der Wand 30, der in einem Bereich zwischen 5° und 30°, insbesondere 8° und 20°, verlaufen kann. Statt einer geraden Ausbildung der Wand 30 kann diese bei Bedarf auch gestuft oder profiliert ausgebildet sein, um Befestigungsmittel 54 aufzunehmen. Die Befestigungsmittel können dabei außermittig angeordnet sein, also bezogen auf die Seitenwand 22 an einer Position, an der der Abstand zwischen Wand 30 und Seitenwand 22 größer ist aufgrund der geneigten Ausrichtung der Wand 30 relativ zu der Seitenwand 22.

Das Basisprofil 11 umfasst einen Mittelabschnitt 23, an dem beidseitig Aufnahmen 24 zum Einfügen eines umgebogenen Endabschnittes des Stützprofils 12 vorgesehen sind. Von dem Mittelabschnitt 23 erstreckt sich zunächst ein abgewinkelter Abschnitt 25 zu einem Steg 26, der im Wesentlichen parallel zu dem Mittelabschnitt 23 ausgerichtet ist. Von dem Steg 26 erstreckt sich die Seitenwand 22 im Wesentlichen rechtwinklig, also senkrecht zur Längsrichtung der Schiene 3, wobei von der Seitenwand 22 wieder ein Steg 27 abgewinkelt ist, der parallel zu dem Steg 26 ausgerichtet ist. Dadurch ist zwischen dem Steg 27 und dem Mittelabschnitt 23 nur ein Spalt 28 zum Durchführen des Stützprofils 12 ausgebildet.

Das Basisprofil 11 ist in Figur 9 im Detail dargestellt und zu einer Mittelebene durch den Mittelabschnitt 23 symmetrisch ausgebildet.

Das Stützprofil 12 ist in Figur 10 in einer modifizierten Ausführungsform dargestellt. Das Stützprofil 10 umfasst eine Bodenwand 31, die parallel zu dem Mittelabschnitt 23 ausgerichtet ist, wobei sich von der Bodenwand die beiden Wände 30' abgewinkelt erstrecken, beispielsweise in einem Winkel von 80°, so dass die Wände 30' geneigt zu den Seitenwänden 22 verlaufen. Von den Wänden 30' erstreckt sich ein endseitiger nach innen gerichteter Steg 32, so dass das Stützprofil 12 im Wesentlichen C-förmig ausgebildet ist. Anders als bei dem in Figur 8 gezeigten Ausführungsbeispiel wird die dreieckförmige Aufnahme nicht zwischen der Seitenwand 22, dem Steg 27 und der Wand 30 gebildet, sondern zwischen dem Steg 26, der Seitenwand 22 und der Wand 30', also statt in Figur 8 auf der oberen Seite auf der unteren Seite des Basisprofils 11.

In dem dargestellten Ausführungsbeispiel ist das Stützprofil 12 an dem Übergang zwischen der Wand 30 und den Stegen 32 an der Seitenwand 22 geführt, so dass bei einer entsprechenden Biege- oder Torsionsbelastung eine Abstützung des Stützprofils 12 an dem Basisprofil 11 gewährleistet ist. Für die Befestigung der Tragschalen 5 ist eine Aufnahme zwischen der Wand 30 und der Seitenwand 22 ausgebildet, wobei die Form der Aufnahme auch variiert werden kann. Die Wand 30 könnte beispielsweise gestuft statt geradlinig ausgebildet sein. Zumindest ein Abschnitt der Wand 30 sollte winklig zu der Seitenwand 22 verlaufen, damit eine entsprechende Aufnahme Befestigungsmittel zur Fixierung der Tragschale 5 ausgebildet wird.

### Bezugszeichenliste

- 1: Nutzfahrzeug
- 2: Runge
- 3: Schiene
- 4: Ladeboden
- 5: Tragschale
- 6: Latte
- 7: Kopfteil
- 8: Platte
- 9: Steg
- 10: Rolle
- 11: Basisprofil
- 12: Stützprofil
- 14: Hebel
- 15: Vorsprung
- 16: Achse
- 17: Griffabschnitt
- 18: Sperrhebel
- 19: Schraube
- 20: Befestigungsmittel
- 21: Öffnung
- 22: Seitenwand
- 23: Mittelabschnitt
- 24: Aufnahme
- 25: Abschnitt
- 26: Steg
- 27: Steg
- 28: Spalt
- 30, 30': Wand
- 31: Bodenwand
- 32: Steg
- 50: Aufnahme
- 51: Stirnwand
- 52: Seitenwand
- 53: Bodensteg
- 54: Befestigungsmittel

- α: Winkel

## Patentansprüche

1. Runge (2) für ein Nutzfahrzeug (1), mit einem Basisprofil (11), das an einem Rungenlager benachbart zu einem Ladeboden (4) eines Nutzfahrzeuges (1) fixierbar ist, und einem in dem Basisprofil (11) teilweise aufgenommenes Stützprofil (12), an dem ein Kopfteil (7) mit einem Laufwagen (8, 9, 10) montiert ist, mittels dem die Runge (2) entlang einer Schiene (3) eines Dachaufbaus verfahrbar gelagert ist, wobei an mindestens einer Außenseite einer Seitenwand (22) des Basisprofils (11) mindestens eine Tragschale (5) zur Aufnahme einer Latte (6) vorgesehen ist, **dadurch gekennzeichnet, dass** eine Wand (30, 30') des Stützprofils (12) benachbart zu einer Innenseite der Seitenwand (22) des Basisprofils (11) im Querschnitt gesehen zumindest teilweise winklig zu der Seitenwand (22) verläuft, um eine Aufnahme für Befestigungsmittel (54) für die Tragschale (5) zwischen der Seitenwand (22) des Basisprofils (11) und der Wand (30, 30') des Stützprofils (12) auszubilden.

2. Runge nach Anspruch 1, **dadurch gekennzeichnet, dass** die Wand (30, 30') des Stützprofils (12) benachbart zu der Innenseite der Seitenwand (22) in einem Winkel zwischen 5° und 30°, insbesondere 8° bis 20°, geneigt zu der Seitenwand (22) ausgerichtet ist.

3. Runge nach Anspruch 1 oder 2, **dadurch gekennzeichnet, dass** die Befestigungsmittel (54) zur Fixierung der mindestens einen Tragschale (5) außermittig zur Mitte in Längsrichtung des Basisprofils (11) gesehen angeordnet sind.

4. Runge nach einem der vorhergehenden Ansprüche, **dadurch gekennzeichnet, dass** das Stützprofil (12) im Querschnitt im Wesentlichen C-förmig mit einer Bodenwand (31), zwei Wänden (30, 30') benachbart zu jeweils einer Seitenwand (22) des Basisprofils (11) und zwei endseitigen Stegen (32) ausgebildet ist.

5. Runge nach Anspruch 4, **dadurch gekennzeichnet, dass** die zwei Stege (32) parallel zu der Bodenwand (31) angeordnet sind.

6. Runge nach einem der vorhergehenden Ansprüche, **dadurch gekennzeichnet, dass** das Basisprofil (11) einen Mittelabschnitt (32) aufweist, an dem beidseitig Aufnahmen (24) zum Einfügen von Wänden (30, 30') und endseitigen Stegen (32) des Stützprofils (12) vorgesehen sind.

7. Runge nach einem der vorhergehenden Ansprüche, **dadurch gekennzeichnet, dass** das Basisprofil (11) und das Stützprofil (12) über Befestigungsmittel (19, 20) aneinander festgelegt sind.

8. Runge nach einem der Ansprüche 1 bis 6, **dadurch gekennzeichnet, dass** das Basisprofil (11) und das Stützprofil (12) relativ zueinander verschiebbar sind und das Absenken des Stützprofils (12) über mindestens einen Anschlag begrenzt ist.

9. Runge nach einem der vorhergehenden Ansprüche, **dadurch gekennzeichnet, dass** das Basisprofil (11) und/oder das Stützprofil (12) aus einem gebogenen Metallblech hergestellt sind.

10. Nutzfahrzeug (1) mit einem Ladeboden (4), **dadurch gekennzeichnet, dass** mindestens eine Runge (2) nach einem der vorhergehenden Ansprüche zwischen dem Ladeboden (4) und einer Schiene (3) eines Dachaufbaus angeordnet ist.

## Claims

1. A stanchion (2) for a commercial vehicle (1), comprising a base profile (11) which can be fixed to a stanchion bearing adjacent to a trunk floor (4) of a commercial vehicle (1), and a support profile (12) which is partly accommodated in the base profile (11) and on which a head part (7) with a carriage (8, 9, 10) is mounted, by means of which the stanchion (2) is displaceably mounted along a rail (3) of a roof structure, wherein at least one support shell (5) for accommodating a lath (6) is provided on at least one exterior side of the side wall (22) of the base profile (11), **characterized in that** a wall (30, 30') of the support profile (12) extends adjacent to an inner side of the side wall (22) of the base profile (11) at least partly angularly to the side wall (22) as seen in the cross-section in order to form a receiver for fastening means (54) for the support shell (5) between the side wall (22) of the base profile (11) and the wall (30, 30') of the support profile (12).

2. A stanchion according to claim 1, **characterized in that** the wall (30, 30') of the support profile (12) is oriented adjacent to the inner side of the side wall (22) at an angle of between 5° and 30°, especially 80° to 20°, inclined to the side wall (22).

3. A stanchion according to claim 1 or 2, **characterized in that** for fixing the at least one support shell (5) the fastening means (54) are arranged off-centre in relation to the middle as seen in the longitudinal direction of the base profile (11).

4. A stanchion according to one of the preceding claims, **characterized in that** the support profile (12) is formed in the cross-section in a substantially C-shaped manner with a base wall (31), two walls (30, 30') adjacent to one respective side wall (22) of the base profile (11), and two end-side webs (32):

5. A stanchion according to claim 4, **characterized in that** the two webs (32) are arranged parallel to the bottom wall (31).

6. A stanchion according to one of the preceding claims, **characterized in that** the base profile (11) has a middle section (32) on which receivers (24) are provided on both sides for inserting walls (30, 30') and end-side webs (32) of the support profile (12).

7. A stanchion according to one of the preceding claims, **characterized in that** the base profile (11) and the support profile (12) are fixed to each other via fastening means (19, 20).

8. A stanchion according to one of the claims 1 to 6, **characterized in that** the base profile (11) and the support profile (12) are displaceable relative to each other and the lowering of the support profile (12) is limited by at least one stop.

9. A stanchion according to one of the preceding claims, **characterized in that** the base profile (11) and/or the support profile (12) are made of a bent sheet metal.

10. A commercial vehicle (1) with a trunk floor (4), **characterized in that** at least one stanchion (2) according to one of the preceding claims is arranged between the trunk floor (4) and a rail (3) of a roof structure.

## Revendications

1. Rancher (2) de véhicule utilitaire (1) comprenant un profilé de base (11) qui peut être fixé sur un support de rancher au voisinage d'une plate forme de chargement (4) d'un véhicule utilitaire (1) et un profilé d'appui (12) partiellement logé dans le profilé de base (11) et sur lequel est montée une partie de tête (7) avec un coulisseau (8, 9, 10) au moyen duquel le rancher (2) est monté mobile le long d'un rail (3) d'une structure de toit, dans lequel il est prévu sur au moins la face externe d'une paroi latérale (22) du profilé de base (11) au moins une coque support (5) pour la réception d'une tringle (6),
**caractérisé en ce qu'**
une paroi (30, 30') du profilé d'appui (12) s'étend, au voisinage de la face interne de la paroi latérale (22) du profilé de base (11), considérée en section, au moins partiellement angulairement vers la paroi latérale (22) pour former un logement de réception de moyens de fixation (54) de la coque support (5) entre la paroi latérale (22) du profilé de base (11) et la paroi (30, 30') du profilé d'appui (12).

2. Rancher conforme à la revendication 1,
**caractérisé en ce que**
la paroi (30, 30') du profilé d'appui (12) est orientée au voisinage de la face interne de la paroi latérale (22) en étant inclinée par rapport à la paroi latérale (22) d'un angle compris entre 5° et 30°, en particulier entre 8° et 20°.

3. Rancher conforme à la revendication 1 ou 2,
**caractérisé en ce que**
les moyens de fixation (54) permettant la fixation de la coque support (5) sont décentrés, en étant considérés dans la direction longitudinale du profil de base (11).

4. Rancher conforme à l'une des revendications précédentes,
**caractérisé en ce que**
le profilé d'appui (12) a une section essentiellement en forme de C, avec une paroi de base (31), deux parois (30, 30') respectivement situées au voisinage d'une paroi latérale (22) du profilé de base (11) et deux barrettes d'extrémité (32).

5. Rancher conforme à la revendication 4,
**caractérisé en ce que**
les deux barrettes (32) sont parallèles à la paroi de base (31).

6. Rancher conforme à l'une des revendications précédentes,
**caractérisé en ce que**
le profilé de base (11) comprend un segment médian (23) de part et d'autre duquel sont positionnés des logements de réception (24) des parois (30, 30') et des barrettes d'extrémité (32) du profilé d'appui (12).

7. Rancher conforme à l'une des revendications précédentes,
**caractérisé en ce que**
le profilé de base (11) et le profilé d'appui (12) sont fixés l'un à l'autre par des moyens de fixation (19, 20).

8. Rancher conforme à l'une des revendications 1 à 6,
**caractérisé en ce que**
le profilé de base (11) et le profilé d'appui (12) peuvent coulisser l'un par rapport à l'autre, et l'abaissement du profil d'appui (12) est limité par au moins une butée.

9. Rancher conforme à l'une des revendications précédentes,
**caractérisé en ce que**
le profilé de base (11) et/ou le profilé d'appui (12) est(sont) réalisé(s) en une tôle pliée.

10. Véhicule utilitaire (1) comprenant une plate forme de chargement (4),
**caractérisé en ce qu'**
au moins un rancher (2) conforme à l'une des revendications précédentes est monté entre la plate forme de chargement (4) et un rail (3) d'une structure de toit.
